(19) Europäisches Patentamt
European Patent Office
Office européen des brevets

(11) Veröffentlichungsnummer : **0 210 487 B1**

# (12) EUROPÄISCHE PATENTSCHRIFT

(45) Veröffentlichungstag der Patentschrift : **13.12.89**

(51) Int. Cl.[4] : **A 01 N 47/30**, A 01 N 47/42

(21) Anmeldenummer : **86109384.7**

(22) Anmeldetag : **09.07.86**

## (54) Verwendung von N-(4-Phenoxy-2,6-diisopropylphenyl)-N'-tert.butylthioharnstoff zur Bekämpfung von weissen Fliegen.

(30) Priorität : **12.07.85 CH 3036/85**
**20.05.86 CH 2019/86**

(43) Veröffentlichungstag der Anmeldung : **04.02.87 Patentblatt 87/06**

(45) Bekanntmachung des Hinweises auf die Patenterteilung : **13.12.89 Patentblatt 89/50**

(84) Benannte Vertragsstaaten : **AT BE CH DE FR GB IT LI NL**

(56) Entgegenhaltungen :
**EP-A- 0 025 010**
**EP-A- 0 145 662**
**DE-A- 2 702 235**
**DE-A- 3 034 905**

(73) Patentinhaber : **CIBA-GEIGY AG**
**Klybeckstrasse 141**
**CH-4002 Basel (CH)**

(72) Erfinder : **Drabek, Jozef, Dr.**
**Benkenstrasse 12**
**CH-4104 Oberwil (CH)**

(74) Vertreter : **Zumstein, Fritz, Dr. et al**
**Bräuhausstrasse 4**
**D-8000 München 2 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 210 487 B1

Jouve, 18, rue St-Denis, 75001 Paris, France

**Beschreibung**

Die vorliegende Erfindung betrifft die Verwendung von N-(4-Phenoxy-2,6-diisopropylphenyl)-N'-tert.butyl-thioharnstoff zur Bekämpfung von Insekten der Familie Aleyrodidae (weisse Fliegen).

Die weissen Fliegen zählen zur Gruppe von wichtigen Schädlingen in Baumwoll- und Gemüsekulturen, wobei sowohl Freiland- als auch Gewächshausgemüse stark in Mitleidenschaft gezogen wird. Verschiedene Arten dieser Schädlinge haben gegenüber den bis jetzt zu ihrer Bekämpfung eingesetzten Wirkstoffen, wie z. B. organischen Phosphorverbindungen und Pyrethroiden Resistenz, entwickelt.

Ueberraschenderweise wurde nun gefunden, dass mit der aus der DE-OS Nr. 3 034 905 bekannten Verbindung der Formel

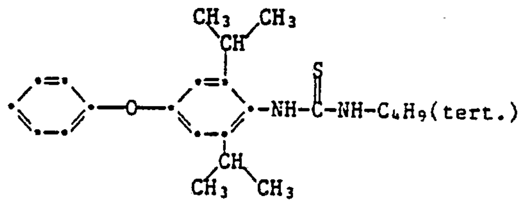
(I)

nicht nur sensible, sondern auch resistente Aleyrodidae-Arten erfolgreich bekämpft werden können. Zur Familie der Aleyrodidae gehören u. a. die Gattung Trialeurodes, wie z. B. die Spezies Trialeurodes brassicae, Trialeurodes vaporariorum oder Trialeurodes vittata, und die Gattung Bemisia, wie z. B. Bemisia giffardi, Bemisia inconspicua oder insbesondere Bemisia tabaci. Dabei ist zu bemerken, dass alle Entwicklungsstadien unter Kontrolle gebracht werden können. Besonders vorteilhafte Resultate werden gegen Nymphen und Adulte von sensiblen und insbesondere resistenten Stämmen erzielt.

Die erfindungsgemäss zu verwendende Verbindung der Formel I kann in an sich bekannter Weise durch Umsetzung des Isothiocyanates der Formel

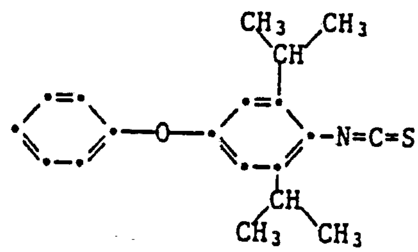
(II)

mit tert. Butylamin hergestellt werden.

Das Verfahren wird im Vakuum oder bei normalem Druck bei einer Temperatur von 0° bis 100 °C, vorzugsweise bei 20° bis 50 °C, und gegebenenfalls in einem Lösungs- oder Verdünnungsmittel durchgeführt.

Als Lösungs- oder Verdünnungsmittel eignen sich z. B. Aether und ätherartige Verbindungen, wie Diäthyläther, Diisopropyläther, Dioxan, 1,2-Dimethoxyäthan und Tetrahydrofuran; Amide, wie N,N-dialkylierte Carbonsäureamide; aliphatische, aromatische sowie halogenierte Kohlenwasserstoffe, insbesondere Benzol, Toluol, Xylole, Chloroform und Chlorbenzol; Nitrile wie Acetonitril; Dimethylsulfoxid und Ketone wie Aceton und Methyläthylketon.

Die Verbindung der Formel II ist bekannt und kann nach bekannten Methoden hergestellt werden.

Die Verbindung der Formel I wird in unveränderter Form oder vorzugsweise zusammen mit den in der Formulierungstechnik üblichen Hilfsmitteln eingesetzt und wird daher z. B. zu Emulsionskonzentraten, direkt versprühbaren oder verdünnbaren Lösungen, verdünnten Emulsionen, Spritzpulvern, löslichen Pulvern, Stäubemitteln, Granulaten, auch Verkapselungen in z. B. polymeren Stoffen in bekannter Weise verarbeitet. Die Anwendungsverfahren wie Versprühen, Vernebeln, Verstäuben, Verstreuen oder Giessen werden den gegebenen Verhältnissen entsprechend gewählt.

Die Formulierungen, d. h. die den Wirkstoff der Formel I und gegebenenfalls einen festen oder flüssigen Zusatzstoff enthaltenden Mittel, Zubereitungen oder Zusammensetzungen werden in bekannter Weise hergestellt, z. B. durch inniges Vermischen und/oder Vermahlen des Wirkstoffes mit Streckmitteln, wie z. B. mit Lösungsmitteln, festen Trägerstoffen, und gegebenenfalls oberflächenaktiven Verbindungen (Tensiden).

Als Lösungsmittel können in Frage kommen: Aromatische Kohlenwasserstoffe, bevorzugt die Fraktionen $C_8$ bis $C_{12}$, wie z. B. Xylolgemische oder substituierte Naphthaline, Phthalsäureester wie Dibutyl- oder Dioctylphthalat, aliphatische Kohlenwasserstoffe wie Cyclohexan oder Paraffine, Alkohole

und Glykole sowie deren Aether und Ester, wie Aethanol, Aethylenglykol, Aethylenglykolmonomethyl- oder -äthyläther, Essigester, Propylmyristat oder Propylpalmitat, Ketone wie Cyclohexanon, stark polare Lösungsmittel wie N-Methyl-2-pyrrolidon, Dimethylsulfoxid oder Dimethylformamid, sowie gegebenenfalls epoxidierte Pflanzenöle wie epoxidiertes Kokosnussöl oder Sojaöl ; Silikonöle oder Wasser.

Als feste Trägerstoffe, z. B. für Stäubemittel und dispergierbare Pulver, werden in der Regel natürliche Gesteinsmehle verwendet, wie Calcit, Talkum, Kaolin, Montmorillonit oder Attapulgit. Zur Verbesserung der physikalischen Eigenschaften können auch hochdisperse Kieselsäure oder hochdisperse saugfähige Polymerisate zugesetzt werden. Als gekörnte, adsorptive Granulatträger kommen poröse Typen, wie z. B. Bimsstein, Ziegelbruch, Sepiolit oder Bentonit, als nicht sorptive Trägermaterialien z. B. Calcit oder Sand in Frage. Darüberhinaus kann eine Vielzahl von vorgranulierten Materialien anorganischer oder organischer Natur wie insbesondere Dolomit oder zerkleinerte Pflanzenrückstände verwendet werden.

Als oberflächenaktive Verbindungen kommen nichtionogene, kation- und/oder anionaktive Tenside mit guten Emulgier-, Dispergier- und Netzeigenschaften in Betracht. Unter Tensiden sind auch Tensidgemische zu verstehen.

Geeignete anionische Tenside können sowohl sog. wasserlösliche Seifen wie wasserlösliche synthetische oberflächenaktive Verbindungen sein.

Als Seifen eignen sich die Alkali-, Erdalkali- oder gegebenenfalls substituierten Ammoniumsalze von höheren Fettsäuren ($C_{10}$-$C_{22}$), wie z. B. die Na- oder K-Salze der Oel- oder Stearinsäure, oder von natürlichen Fettsäuregemischen, die z. B. aus Kokosnuss- oder Tallöl gewonnen werden können. Ferner sind auch die Fettsäuremethyl-taurinsalze zu erwähnen.

Häufiger werden jedoch sog. synthetische Tenside verwendet, insbesondere Fettsulfonate, Fettsulfate, sulfonierte Benzimidazolderivate oder Alkylarylsulfonate.

Die Fettsulfonate oder -sulfate liegen in der Regel als Alkali-, Erdalkali- oder gegebenenfalls substituierte Ammoniumsalze vor und weisen einen Alkylrest mit 8 bis 22 C-Atomen auf, wobei Alkyl auch den Alkylteil von Acylresten einschliesst, z. B. das Na- oder Ca-Salz der Ligninsulfonsäure, des Dodecylschwefelsäureesters oder eines aus natürlichen Fettsäuren hergestellten Fettalkoholsulfatgemisches. Hierher gehören auch die Salze der Schwefelsäureester und Sulfonsäuren von Fettalkohol-Aethylenoxid-Addukten. Die sulfonierten Benzimidazolderivate enthalten vorzugsweise 2 Sulfonsäuregruppen und einen Fettsäurerest mit 8-22 C-Atomen. Alkylarylsulfonate sind z. B. die Na-, Ca- oder Triäthanolaminsalze der Dodecylbenzolsulfonsäure, der Dibutylnaphthalinsulfonsäure, oder eines Naphthalinsulfonsäure-Formaldehydkondensationsproduktes.

Ferner kommen auch entsprechende Phosphate wie z. B. Salze des Phosphorsäureesters eines p-Nonylphenol-(4-14)-Aethylenoxid-Adduktes und Phospholipide in Frage.

Als nichtionische Tenside kommen in erster Linie Polyglykolätherderivate von aliphatischen oder cycloaliphatischen Alkoholen, gesättigten oder ungesättigten Fettsäuren und Alkylphenolen in Frage, die 3 bis 30 Glykoläthergruppen und 8 bis 20 Kohlenstoffatome im (aliphatischen) Kohlenwasserstoffrest und 6 bis 18 Kohlenstoffatome im Alkylrest der Alkylphenole enthalten können.

Weitere geeignete nichtionische Tenside sind die wasserlöslichen, 20 bis 250 Aethylenglykoläthergruppen und 10 bis 100 Propylenglykoläthergruppen enthaltenden Polyäthylenoxid-Addukte an Polypropylenglykol, Aethylendiaminopolypropylenglykol und Alkylpolypropylenglykol mit 1 bis 10 Kohlenstoffatomen in der Alkylkette. Die genannten Verbindungen enthalten üblicherweise pro Propylenglykoleinheit 1 bis 5-Aethylenglykoleinheiten.

Als Beispiele nichtionischer Tenside seien Nonylphenolpolyäthoxyäthanole, Ricinusölpolyglycoläther, Ricinusölthioxilat, Polypropylen-Polyäthylenoxid-Addukte, Tributylphenoxypolyäthoxyäthanol, Polyäthylenglykol und Octylphenoxypolyäthoxyäthanol erwähnt.

Ferner kommen auch Fettsäureester von Polyoxyäthylensorbitan wie das Polyoxyäthylensorbitantrioleat in Betracht.

Bei den kationischen Tensiden handelt es sich vor allem um quartäre Ammoniumsalze, welche als N-Substituenten mindestens einen Alkylrest mit 8 bis 22 C-Atomen enthalten und als weitere Substituenten niedrige, gegebenenfalls halogenierte Alkyl-, Benzyl- oder niedrige Hydroxyalkylreste aufweisen. Die Salze liegen vorzugsweise als Halogenide, Methylsulfate oder Aethylsulfate vor, z. B. das Stearyltrimethylammoniumchlorid oder das Benzyldi(2-chloräthyl)-äthylammoniumbromid.

Die in der Formulierungstechnik gebräuchliden Tenside sind u. a. in folgenden Publikationen beschrieben :

« McCutcheon's Detergents and Emulsifiers Annual » MC Publishing Corp., Ridgewood, New Jersey, 1979 ; Dr. Helmut Stache « Tensid Taschenbuch », Carl Hanser Verlag München/Wien 1981.

Die pestiziden Zubereitungen enthalten in der Regel 0,1 bis 99 %, insbesondere 0,1 bis 95 %, Wirkstoff der Formel I, 1 bis 99,9 % eines festen oder flüssigen Zusatzstoffes und 0 bis 25 %, insbesondere 0,1 bis 25 %, eines Tensides.

Während als Handelsware eher konzentrierte Mittel bevorzugt werden, verwendet der Endverbraucher in der Regel verdünnte Mittel.

Die Mittel können auch weitere Zusätze wie Stabilisatoren, Entschäumer, Viskositätsregulatoren,

Bindemittel, Haftmittel sowie Dünger oder andere Wirkstoffe zur Erzielung spezieller Effekte enthalten.

Beispiel 1

Herstellung von N-(4-Phenoxy-2,6-diisopropylphenyl)-N'-tert.butyl-thioharnstoff

19,2 g N-2,6-Diisopropyl-4-phenoxyphenylisothiocyanat werden mit 10 ml Toluol verdünnt und dann mit 13,7 g tert. Butylamin versetzt. Das Reaktionsgemisch wird anschliessend 12 Stunden bei 20-25 °C gerührt. Nach dem Eindampfen und mehrmaligem Umkristallisieren aus Hexan erhält man die Verbindung der Formel

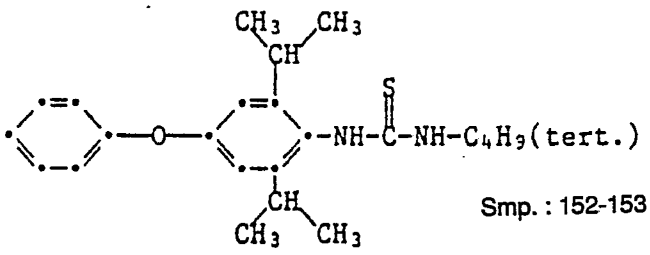

Smp.: 152-153 °C

Beispiel 2

Formulierungsbeispiele für den Wirkstoff gemäss dem Herstellungsbeispiel 1

(% = Gewichtsprozent)

| 2.1 Emulsions-Konzentrate | a) | b) | c) | d) |
|---|---|---|---|---|
| Wirkstoff gemäss dem Herstellungsbeispiel 1 | 10 % | 25 % | 40 % | 50 % |
| Ca-Dodecylbenzolsulfonat | - | 5 % | 8 % | 6 % |
| Ricinusöl-polyäthylenglykoläther (36 Mol AeO) | - | 5 % | - | - |
| Tributylphenol-polyäthylenglykoläther (30 Mol AeO) | - | - | 12 % | 4 % |
| Ricinusölthioxilat | 25 % | - | - | - |
| Cyclohexanon | - | - | 15 % | 20 % |
| Butanol | 15 % | - | - | - |
| Xylolgemisch | - | 65 % | 25 % | 20 % |
| Essigester | 50 % | - | - | - |

Aus solchen Konzentraten können durch Verdünnen mit Wasser Emulsionen jeder gewünschten Konzentration hergestellt werden.

| 2.2 Lösungen | a) | b) |
|---|---|---|
| Wirkstoff gemäss dem Herstellungsbeispiel 1 | 10 % | 5 % |
| Aethylenglykol-monomethyläther | - | - |
| Polyäthylenglykol (MG 400) | 70 % | - |
| N-Methyl-2-pyrrolidon | 20 % | - |
| Epoxidiertes Kokosnussöl | - | 1 % |

(Fortsetzung)

| 2.2 Lösungen | a) | b) |
|---|---|---|
| Benzin (Siedegrenzen 160-190°C) | - | 94 % |

Die Lösungen sind zur Anwendung in Form kleinster Tropfen geeignet.

| 2.3 Granulate | a) | b) |
|---|---|---|
| Wirkstoff gemäss dem Herstellungsbeispiel 1 | 5 % | 10 % |
| Kaolin | 94 % | - |
| Hochdisperse Kieselsäure | 1 % | - |
| Attapulgit | - | 90 % |

Der Wirkstoff wird in Methylenchlorid gelöst, auf den Träger aufgesprüht und das Lösungsmittel anschliessend im Vakuum abgedampft.

| 2.4 Stäubemittel | a) | b) | c) | d) |
|---|---|---|---|---|
| Wirkstoff gemäss dem Herstellungsbeispiel 1 | 2 % | 5 % | 5 % | 8 % |
| Hochdisperse Kieselsäure | 1 % | 5 % | - | - |
| Talkum | 97 % | - | 95 % | - |
| Kaolin | - | 90 % | - | 92 % |

Durch inniges Vermischen der Trägerstoffe mit dem Wirkstoff erhält man gebrauchsfertige Stäubemittel.

| 2.5 Spritzpulver | a) | b) | c) |
|---|---|---|---|
| Wirkstoff gemäss dem Herstellungsbeispiel 1 | 20 % | 50 % | 75 % |
| Na-Ligninsulfonat | 5 % | 5 % | - |
| Na-Laurylsulfat | 3 % | - | 5 % |
| Na-Diisobutylnaphthalinsulfonat | - | 6 % | 10 % |
| Octylphenolpolyäthylenglykoläther (7-8 Mol AeO) | - | 2 % | - |
| Hochdisperse Kieselsäure | 5 % | 10 % | 10 % |
| Kaolin | 67 % | 27 % | - |

Der Wirkstoff wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

| 2.6 Extruder Granulat | |
|---|---|
| Wirkstoff gemäss dem Herstellungsbeispiel 1 | 10 % |
| Na-Ligninsulfonat | 2 % |
| Carboxymethylcellulose | 1 % |
| Kaolin | 87 % |

Der Wirkstoff wird mit den Zusatzstoffen vermischt, vermahlen und mit Wasser angefeuchtet. Dieses Gemisch wird extrudiert und anschliessend im Luftstrom getrocknet.

2.7 Umhüllungs-Granulat

| | |
|---|---|
| Wirkstoff gemäss dem Herstellungsbeispiel 1 | 3 % |
| Polyäthylenglykol (MG 200) | 3 % |
| Kaolin | 94 % |

Der feingemahlene Wirkstoff wird in einem Mischer auf das mit Polyäthylenglykol angefeuchtete Kaolin gleichmässig aufgetragen. Auf diese Weise erhält man staubfreie Umhüllungs-Granulate.

2.8 Suspensions-Konzentrat

| | |
|---|---|
| Wirkstoff gemäss dem Herstellungsbeispiel 1 | 40 % |
| Aethylenglykol | 10 % |
| Nonylphenolpolyäthylenglykoläther (15 Mol AeO) | 6 % |
| Na-Ligninsulfonat | 10 % |
| Carboxymethylcellulose | 1 % |
| 37%ige wässrige Formaldehyd-Lösung | 0,2 % |
| Silikonöl in Form einer 75%igen wässrigen Emulsion | 0,8 % |
| Wasser | 32 % |

Der fein gemahlene Wirkstoff wird mit den Zusatzstoffen innig vermischt. Man erhält so ein Suspensions-Konzentrat, aus welchem durch Verdünnen mit Wasser Suspensionen jeder gewünschten Konzentration hergestellt werden können.

Beispiel 3

Biologische Prüfung

a) Wirkung verschiedener Insektizide im Vergleich zum Wirkstoff der Formel I gegen sensible und resistente Adulte von Bemisia tabaci

Baumwollblätter werden in die Testlösung (Wirkstoffkonzentration von 0,1 bis 4 100 ppm) eingetaucht. Auf die behandelten Blätter werden dann in bedeckten Petri-Schalen 20-50 sensible resp. resistente Adulte von Bemisia tabaci plaziert.

Von jeder Konzentration werden zwei Tests durchgeführt.

Nach 24 Stunden wird die Mortalität durch Auszählen bestimmt. Aus der prozentualen Abtötung bei den einzelnen Konzentrationen wird dann die Dosis-Mortalitäts-Linie nach der Probit-Analysenmethode berechnet und aus diesen Linien die $LC_{50}$-Werte bestimmt (vgl. L. BANKI : Bioassay of pesticides in the laboratory : 1978).

Die erhaltenen Daten sind in der folgenden Tabelle zusammengestellt :

| Substanz | $LC_{50}$-Werte in ppm | |
|---|---|---|
| | sensibler Stamm von Bemisia tabaci | resistenter Stamm (Sudan) von Bemisia tabaci |
| Verbindung der Formel I | 11,6 | 12,3 |
| Monocrotophos | 6,5 | 1327 |
| Dicrotophos | 12,8 | 1202 |
| Dimethoat | 12,2 | 4029 |
| Thiodicarb | 4,5 | >4000 |
| Methamidophos | 5,8 | >4000 |

Tabelle (Fortsetzung)

| Substanz | $LC_{50}$-Werte in ppm | |
|---|---|---|
| | sensibler Stamm von Bemisia tabaci | resistenter Stamm (Sudan) von Bemisia tabaci |
| Fenvalerat | 1,8 | 56 |
| Deltamethrin | 0,2 | 75 |
| Cypermethrin | 2,9 | 140 |

b) Wirkung von Endosulfan im Vergleich zum Wirkstoff der Formel I gegen Nymphen von resistenten Bemisia tabaci

Vom Wirkstoff der Formel I und von Endosulfan wird eine Konzentrationsreihe von 500, 250, 125, 60, 30, 15, 7,5 und 3,75 ppm hergestellt. In Töpfen werden je 3 Baumwollpflanzen im Keimblattstadium bereitgestellt, wobei für jede Konzentration 2 Töpfe benötigt werden. Pro Topf werden 50 Adulte eines resistenten Stammes von Bemisia tabaci auf die Pflanzen ausgesetzt und die Pflanzen mit einem Zylinder abgedeckt. Innerhalb von 3 Tagen erfolgt die Eiablage. Die Adulten werden jetzt von den Pflanzen abgesauft. Nach 10 Tagen befinden sich die Nymphen im 2. Häutungsstadium und nun werden die Pflanzen einer Sprühbehandlung bis zur Tropfnässe unterworfen. Nach 7-10 Tagen erfolgt die Auswertung, indem die Mortalität unter einem Binokular festgestellt wird. Zu diesem Zeitpunkt befinden sich die Nymphen der unbehandelten Kontrolle im Rotaugenstadium.

Die folgende Tabelle gibt für jede Konzentration die Mortalitätsrate in Prozenten an :

| Konzentration in ppm | Mortalität in % Verb. I | Endosulfan |
|---|---|---|
| 3,75 | 100 | 0 |
| 7,5 | 100 | 0 |
| 15 | 100 | 0 |
| 30 | 100 | 0 |
| 60 | 100 | 0 |
| 125 | 100 | 42 |
| 250 | 100 | 51 |
| 500 | 100 | 86 |

## Patentansprüche

1. Die Verwendung der Verbindung der Formel

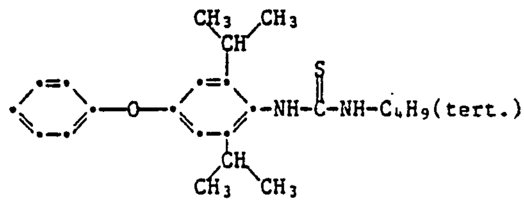

(I)

zur Bekämpfung von Insekten der Familie Aleyrodidae (weisse Fliegen).

2. Verwendung gemäss Anspruch 1 zur Bekämpfung von sensiblen und resistenten Aleyrodidae-Arten in Baumwoll- und Gemüsekulturen.

3. Verwendung gemäss Anspruch 2 zur Bekämpfung aller Entwicklungsstadien.

4. Verwendung gemäss Anspruch 3 zur Bekämpfung von Insekten der Gattungen Trialeurodes und Bemisia.

5. Verwendung gemäss Anspruch 4 zur Bekämpfung von Nymphen und Adulten.
6. Verwendung gemäss Anspruch 5 zur Bekämpfung von Bemisia tabaci.
7. Verwendung gemäss Anspruch 6 zur Bekämpfung der Adulten von resistenten Bemisia tabaci-Stämmen.

## Claims

1. Use of the compound of the formula

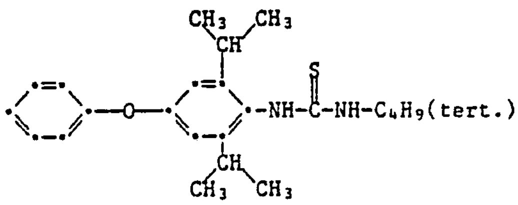

(I)

for controlling insects of the family Aleyrodidae (white flies).
2. Use according to claim 1 for controlling sensitive and resistant Aleyrodidae species in crops of cotton and vegetables.
3. Use according to claim 2 for controlling all development stages.
4. Use according to claim 3 for controlling insects of the genera Trialeurodes and Bemisia.
5. Use according to claim 4 for controlling nymphs and adults.
6. Use according to claim 5 for controlling Bemisia tabaci.
7. Use according to claim 6 for controlling adults of resistant Bemisia tabaci strains.

## Revendications

1. L'utilisation du composé de formule

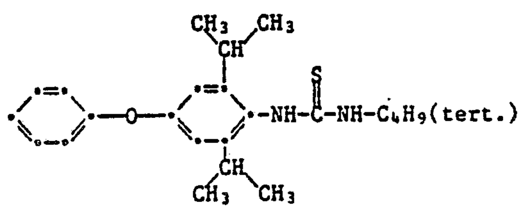

(I)

pour la lutte contre les insectes de la famille des Aleyrodidae (mouches blanches). .
2. Utilisation selon la revendication 1 pour la lutte contre les espèces sensibles et résistantes d'Aleyrodidae dans les cultures de coton et les cultures potagères.
3. Utilisation selon la revendication 2 pour la lutte contre tous les stades de développement.
4. Utilisation selon la revendication 3 pour la lutte contre les insectes des genres Trialeurodes et Bemisia.
5. Utilisation selon la revendication 4 pour la lutte contre les nymphes et les adultes.
6. Utilisation selon la revendication 5, pour la lutte contre Bemisia tabaci.
7. Utilisation selon la revendication 6, pour la lutte contre les adultes des souches résistantes de Bemisia tabaci.